# EUROPEAN PATENT SPECIFICATION

(11) **EP 3 988 411 B1**
(45) Date of publication and mention of the grant of the patent: **27.03.2024**
(21) Application number: 21202746.0
(22) Date of filing: 14.10.2021
(51) Int. Cl.: B60W 10/06, B60W 10/08, B60W 20/13

(54) **CONTROL DEVICE OF HYBRID VEHICLE**
STEUERUNGSVORRICHTUNG EINES HYBRIDFAHRZEUGS
DISPOSITIF DE COMMANDE DE VÉHICULE HYBRIDE

(30) Priority: 26.10.2020 JP 2020178916
(43) Date of publication of application: 27.04.2022
(73) Proprietor: Suzuki Motor Corporation, Hamamatsu-shi, Shizuoka 432-8611 (JP)
(72) Inventor: Iino, Hayato, Hamamatsu-shi, Shizuoka, 432-8611 (JP); Suzuki, Kosuke, Hamamatsu-shi, Shizuoka, 432-8611 (JP)
(74) Representative: Henkel & Partner mbB

(56) References cited:
- JP-A- 2009 119 953
- JP-A- 2011 131 829
- JP-A- 2012 040 928
- JP-A- 2012 116 394
- US-A1- 2020 036 315

## Description

### [Technical Field]

This invention relates to a control device of a hybrid vehicle.

### [Background of the Invention]

In a hybrid vehicle in which an engine and a motor are mechanically and directly connected, a drag torque is generated by the load of the motor when the vehicle runs using the engine.

JP 2015-51676 A discloses a technique that performs zero torque control of generating a torque cancelling a drag torque from a motor not to impede an engine output.

US 2020/036315 A1 discloses a vehicle drive control device that controls a vehicle drive device in which a first engagement device, a rotating electrical machine, and a second engagement device are provided in this order from an input side in a mechanical power transmission path connecting an input to an output, the input being drive-coupled to an internal combustion engine serving as a vehicle drive power source, and the output being drive-coupled to wheels, wherein each of the first engagement device and the second engagement device can be changed between an engaged state in which drive power is transmitted and a disengaged state in which drive power is not transmitted, the vehicle control device including an electronic control unit.

JP 2009 119953 A discloses an electrically assisted bicycle including: a pedal mechanism for converting a force inputted to pedals into a rotational motive force and outputting it to a crankshaft; a driving wheel; and a rotating machinery configured to input/output energy between a stator, a first rotor, and a second rotor via a magnetic circuit formed according to generation of a rotational magnetic field in which the rotational magnetic field, the second rotor, and the first rotor rotate so as to keep a predetermined collinear relation of rotating speed between each other when the energy is inputted and outputted. The first rotor and the second rotor are coupled to the crankshaft and the driving wheel, respectively.

Further, in general, since deterioration of a battery is promoted and a battery usage area is narrowed under an extremely low temperature condition of about -30°C, the output of the motor is limited.

### [Prior Art]

### [Patent Literature]

[Patent Literature 1] JP 2015-51676 A
[Patent Literature 2] US 2020/036315 A1
[Patent Literature 3] JP 2009 119953 A

### [Summary of the Invention]

### [Problem to be solved by the Invention]

However, in the hybrid vehicle described in JP 2015-51676 A, even when the output of the motor is limited under an extremely low temperature condition, the zero torque control is performed, the battery is consumed, and the remaining amount of the battery decreases.

Since power generation cannot be performed under an extremely low temperature condition, the remaining amount of the battery significantly decreases and the function of the motor cannot be used.

Here, an object of this invention is to provide a control device of a hybrid vehicle capable of preventing a situation in which a function of a motor cannot be used under an extremely low temperature condition in a hybrid vehicle that performs zero torque control.

### [Means to solve the problem]

In order to solve the above-described problems, there is provided a control device of a hybrid vehicle as set out in independent claim 1. Advantageous developments are defined in the dependent claims.

### [Effect of the Invention]

In this way, according to this invention, it is possible to prevent a situation in which the function of the motor cannot be used under an extremely low temperature condition in the hybrid vehicle that performs zero torque control.

### [Brief description of figures]

[Fig. 1] Fig. 1 is a schematic configuration diagram of a hybrid vehicle according to an embodiment of this invention.
[Fig. 2] Fig. 2 is an electric circuit configuration diagram of a motor, an inverter, and a high-voltage battery of the hybrid vehicle according to an embodiment of this invention.
[Fig. 3] Fig. 3 is a flowchart showing a sequence of a contactor control process at the time of starting the vehicle in the control device of the hybrid vehicle according to an embodiment of this invention.
[Fig. 4] Fig. 4 is a flowchart showing a sequence of a contactor control process at the time of running the vehicle in the control device of the hybrid vehicle according to an embodiment of this invention.
[Fig. 5] Fig. 5 is a time chart showing a change in contactor state according to the contactor control process at the time of running the vehicle in the control device of the hybrid vehicle according to an embodiment of this invention.

### [Embodiment(s) of the Invention]

A control device of a hybrid vehicle according to embodiments of this invention is a control device of a hybrid vehicle including an engine, a motor mechanically and directly connected to the engine, a battery supplying electric power to the motor, an inverter charging and discharging electric power between the motor and the battery, an contactor taking any one of an on state of electrically connecting the battery and the inverter and an off state of electrically disconnecting the battery and the inverter, and a control unit performing zero torque control of controlling a motor torque so that a load given from the motor to the engine becomes zero at the time of running the vehicle only using the engine as a drive source, wherein the control unit causes the contactor to take the off state when a temperature of the battery is lower than a predetermined temperature.

Accordingly, the control device of the hybrid vehicle according to embodiments of this invention can prevent a situation in which the function of the motor cannot be used under an extremely low temperature condition in the hybrid vehicle that performs zero torque control.

### [Embodiments]

Hereinafter, a hybrid vehicle equipped with a control device according to embodiments of this invention will be described in detail with reference to the drawings.

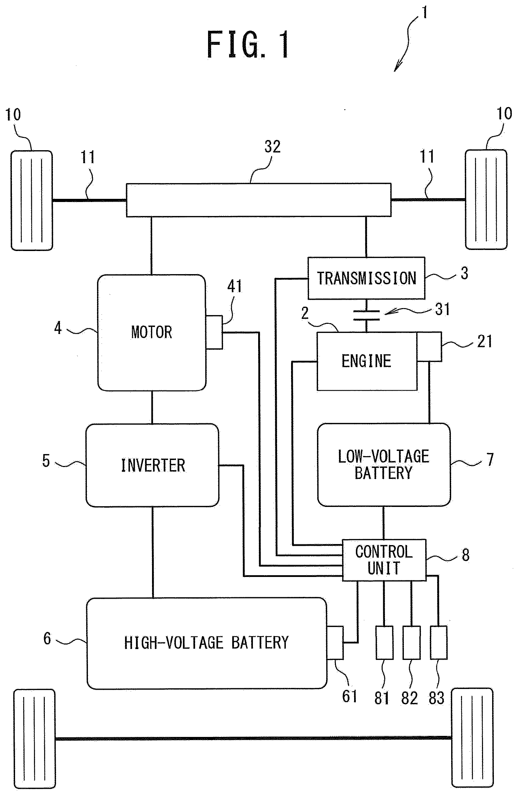

In Fig. 1, a hybrid vehicle 1 according to an embodiment of this invention includes an engine 2 which is an internal combustion engine, a transmission 3, a motor 4, an inverter 5, a high-voltage battery 6 which is a battery, a low-voltage battery 7, and a control unit 8.

A plurality of cylinders are formed in the engine 2. In this embodiment, the engine 2 is configured to perform a series of four strokes including an intake stroke, a compression stroke, an expansion stroke, and an exhaust stroke for each cylinder.

A starting device 21 is connected to the engine 2. The starting device 21 is connected to a crank shaft of the engine 2 through a belt (not shown). The starting device 21 rotates by electric power supplied thereto to rotate the crank shaft and gives a rotational force to the engine 2 at the time of starting.

The starting device 21 is configured as a starter or an integrated starter generator (ISG). Both the starter and the ISG may be provided as the starting device 21.

The transmission 3 shifts the rotation output from the engine 2 and drives a drive wheel 10 through a drive shaft 11. The transmission 3 includes a constantly meshing type transmission mechanism (not shown) including a parallel shaft gear mechanism and an actuator (not shown).

A dry single-plate clutch 31 is provided between the engine 2 and the transmission 3, and the clutch 31 connects or disconnects the power transmission between the engine 2 and the transmission 3.

The transmission 3 is configured as a so-called automated manual transmission (AMT), and an actuator (not shown) is used to switch gears in the transmission mechanism and engage and disengage the clutch 31.

A differential mechanism 32 is provided between the transmission 3 and the drive wheel 10. The differential mechanism 32 and the drive wheel 10 are connected by the drive shaft 11.

The motor 4 is connected to the differential mechanism 32 through a speed reducer (not shown) such as a chain. The motor 4 functions as an electric motor. The motor 4 also functions as a generator and generates electric power by running the hybrid vehicle 1.

The motor 4 is provided with a temperature sensor 41 which detects a temperature of the motor 4. The temperature sensor 41 is connected to the control unit 8.

Under the control of the control unit 8, the inverter 5 converts the DC power supplied from the high-voltage battery 6 or the like into three-phase AC power and supplies it to the motor 4.

Under the control of the control unit 8, the inverter 5 converts the three-phase AC power generated by the motor 4 into DC power. This DC power charges, for example, the high-voltage battery 6. The control unit 8 is configured to detect an inverter voltage which is a voltage applied to the inverter 5.

The high-voltage battery 6 is composed of, for example, a lithium ion storage battery. The high-voltage battery 6 supplies electric power to the inverter 5.

A battery status sensor 61 is provided in the high-voltage battery 6. The battery status sensor 61 detects the charge/discharge current, voltage, and battery temperature of the high-voltage battery 6. The battery status sensor 61 is connected to the control unit 8. The control unit 8 is configured to detect the charge amount of the high-voltage battery 6 by the output of the battery status sensor 61.

The low-voltage battery 7 is composed of, for example, a lead battery. The low-voltage battery 7 supplies electric power to the electric load of the hybrid vehicle 1 such as the starting device 21.

In this way, the hybrid vehicle 1 constitutes a parallel hybrid system in which the powers of both the engine 2 and the motor 4 can be used to drive the vehicle and runs by the power output from at least one of the engine 2 and the motor 4.

The control unit 8 is configured as a computer unit includes a central processing unit (CPU), a random access memory (RAM), a read only memory (ROM), a flash memory storing backup data or the like, an input port, and an output port.

The ROM of the computer unit stores various constants, various maps, and the like as well as a program for causing the computer unit to function as the control unit 8.

That is, when the CPU executes the program stored in the ROM using the RAM as the work area, the computer unit functions as the control unit 8 in this embodiment.

Various sensors including an accelerator opening degree sensor 81, a vehicle speed sensor 82, and an ignition switch 83 are connected to the input port of the control unit 8 in addition to the temperature sensor 41 and the battery status sensor 61.

The accelerator opening degree sensor 81 detects an operation amount of an accelerator pedal (not shown) as an accelerator opening degree. The vehicle speed sensor 82 detects the speed of the hybrid vehicle 1. The ignition switch 83 detects whether or not the system of the hybrid vehicle 1 has been started and whether or not the engine 2 has been started.

On the other hand, various control objects including injectors (not shown) are connected to the output port of the control unit 8 in addition to the starting device 21, the actuator of the transmission 3, and the inverter 5.

In this embodiment, the control unit 8 calculates a driver request torque required by the driver based on the accelerator opening or the like. The control unit 8 controls the engine 2, the transmission 3, the clutch 31, and the motor 4 so that the driver request torque is output to the drive wheel 10.

Further, the control unit 8 switches the running mode of the hybrid vehicle 1.

An EV mode, a HEV mode, and an EG mode are set as the running modes in this embodiment.

The EV mode is a running mode in which the clutch 31 is released and the hybrid vehicle 1 is caused to run by the power of the motor 4. The HEV mode is a control mode in which the clutch 31 is engaged and the hybrid vehicle 1 runs by the power of the engine 2 or the engine 2 and the motor 4. The EG mode is a running mode in which the clutch 31 is engaged and the hybrid vehicle 1 runs by the power of the engine 2.

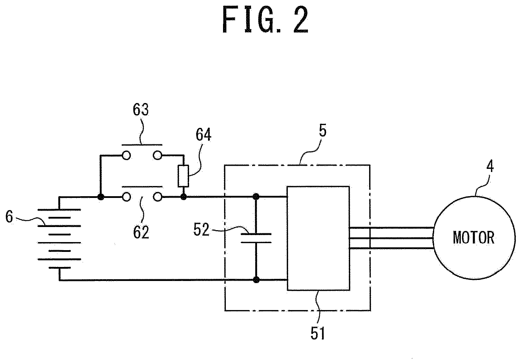

Fig. 2 shows an electric circuit configuration of the motor 4, the inverter 5, and the high-voltage battery 6.

As shown in Fig. 2, the inverter 5 includes an inverter circuit 51 and a smoothing capacitor 52.

The smoothing capacitor 52 smoothes the voltage of the DC power generated between the positive electrode and the negative electrode.

The inverter circuit 51 converts the DC power smoothed by the smoothing capacitor 52 into AC power.

A contactor 62 is provided between the inverter 5 and the high-voltage battery 6. The contactor 62 takes any one of an on state of electrically connecting the inverter 5 and the high-voltage battery 6 and an off state of electrically disconnecting the inverter 5 and the high-voltage battery 6 in accordance with the control of the control unit 8.

A circuit in which a precharge relay 63 and a resistor 64 are connected in series is connected in parallel to the contactor 62. The precharge relay 63 takes any one of an on state of connecting the resistor 64 in parallel to the contactor 62 and an off state of electrically disconnecting the resistor 64 from the contactor 62 in accordance with the control of the control unit 8.

For example, the precharge relay 63 is controlled by the control unit 8 to take an on state before the motor 4 operates and take an off state after the contactor 62 takes an on state.

The control unit 8 supplies DC power from the high-voltage battery 6 to the inverter 5 to drive the motor 4 by turning on the contactor 62.

The control unit 8 executes zero torque control in which the motor 4 is generated with a torque for canceling the drag torque of the motor 4 when the running mode is the EG mode.

When the temperature of the high-voltage battery 6 is lower than a predetermined temperature, the control unit 8 turns off the contactor 62.

When the temperature of the high-voltage battery 6 is lower than a predetermined temperature, the control unit 8 selects the EG mode as the running mode.

When the temperature of the high-voltage battery 6 becomes lower than a predetermined temperature at the time of running the vehicle using the motor 4 as a drive source, the control unit 8 switches the running mode to the EG mode and then turns off the contactor 62.

When the temperature of the high-voltage battery 6 becomes equal to or higher than a predetermined temperature while the hybrid vehicle 1 is running, the control unit 8 turns on the contactor 62 on the condition that the vehicle speed of the hybrid vehicle 1 becomes equal to or lower than a predetermined vehicle speed.

When the temperature of the high-voltage battery 6 becomes equal to or higher than a predetermined temperature while the hybrid vehicle 1 is running, the control unit 8 turns on the contactor 62 on the condition that the voltage of the inverter 5 is equal to or lower than a predetermined voltage.

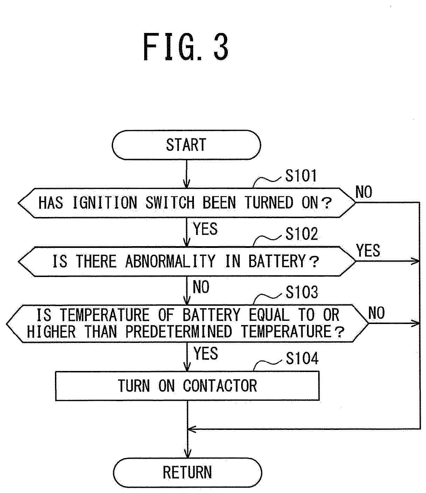

A contactor control process at the time of starting the vehicle in the control device of the hybrid vehicle according to this embodiment with the above-described configuration will be described with reference to Fig. 3. Additionally, the contactor control process at the time of starting the vehicle to be described later is started when the ignition switch 83 is turned off and is performed at a predetermined time interval.

In step S101, the control unit 8 determines whether or not the ignition switch 83 has been turned on. When it is determined that the ignition switch 83 has been turned on, the control unit 8 performs the process of step S102.

When it is determined that the ignition switch 83 has not been turned on, the control unit 8 ends the contactor control process at the time of starting the vehicle.

In step S102, the control unit 8 determines whether or not there is abnormality in the high-voltage battery 6. When it is determined that there is no abnormality in the high-voltage battery 6, the control unit 8 performs the process of step S103.

When it is determined that there is abnormality in the high-voltage battery 6, the control unit 8 ends the contactor control process at the time of starting the vehicle.

In step S103, the control unit 8 determines whether or not the temperature of the high-voltage battery 6 is equal to or higher than a predetermined temperature. When it is determined that the temperature of the high-voltage battery 6 is equal to or higher than a predetermined temperature, the control unit 8 performs the process of step S104.

When it is determined that the temperature of the high-voltage battery 6 is not equal to or higher than a predetermined temperature, the control unit 8 ends the contactor control process at the time of starting the vehicle.

In step S104, the control unit 8 turns on the contactor 62. After the process of step S104 is performed, the control unit 8 ends the contactor control process at the time of starting the vehicle.

In this way, when the temperature of the high-voltage battery 6 is lower than a predetermined temperature at the time of starting the hybrid vehicle 1, the contactor 62 remains in an off state and the hybrid vehicle 1 is driven only by the driving force of the engine 2 without using the motor 4.

When the temperature of the high-voltage battery 6 is lower than a predetermined temperature, the temperature is out of the operating range temperature of the contactor 62 and the output of the motor 4 is also limited. When the contactor 62 is used outside the operating range temperature, the deterioration of parts is accelerated and the contactor function becomes unstable.

Further, when the contactor 62 is turned on while the output of the motor 4 is limited, even if the toque instruction of the motor 4 is 0 Nm, the vehicle travels by the driving force of the engine 2, an electromotive force is generated by the motor 4 due to an increase in vehicle speed, and the remaining amount of the high-voltage battery 6 decreases.

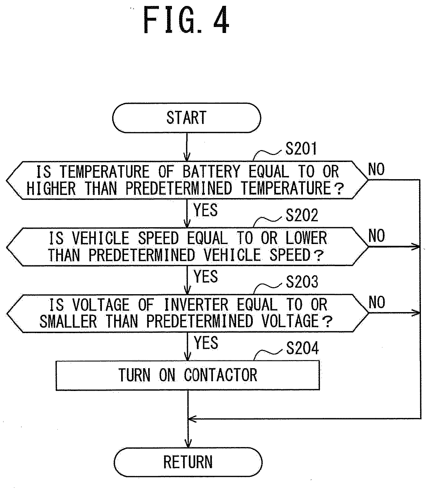

A contactor control process at the time of running the vehicle in the control device of the hybrid vehicle according to this embodiment will be described with reference to Fig. 4. Additionally, the contactor control process at the time of running the vehicle to be described later is started when the running mode is switched to the EG mode and is performed at a predetermined time interval.

In step S201, the control unit 8 determines whether or not the temperature of the high-voltage battery 6 is equal to or higher than a predetermined temperature. When it is determined that the temperature of the high-voltage battery 6 is equal to or higher than a predetermined temperature, the control unit 8 performs the process of step S202.

When it is determined that the temperature of the high-voltage battery 6 is not equal to or higher than a predetermined temperature, the control unit 8 ends the contactor control process at the time of running the vehicle.

In step S202, the control unit 8 determines whether or not the vehicle speed of the hybrid vehicle 1 is equal to or lower than a predetermined vehicle speed. When it is determined that the vehicle speed of the hybrid vehicle 1 is equal to or lower than a predetermined vehicle speed, the control unit 8 performs the process of step S203.

When it is determined that the vehicle speed of the hybrid vehicle 1 is not equal to or lower than a predetermined vehicle speed, the control unit 8 ends the contactor control process at the time of running the vehicle.

In step S203, the control unit 8 determines whether or not the voltage of the inverter 5 is equal to or smaller than a predetermined voltage. When it is determined that the voltage of the inverter 5 is equal to or smaller than a predetermined voltage, the control unit 8 performs the process of step S204.

When it is determined that the voltage of the inverter 5 is not equal to or smaller than a predetermined voltage, the control unit 8 ends the contactor control process at the time of running the vehicle.

In step S204, the control unit 8 turns on the contactor 62. After the process of step S204 is performed, the control unit 8 ends the contactor control process at the time of running the vehicle.

The reason why the contactor 62 is turned on when the vehicle speed of the hybrid vehicle 1 is equal to or lower than a predetermined vehicle speed is because the hybrid vehicle 1 is driven only by the driving force of the engine 2 and an electromotive force is generated in the motor 4 when the vehicle speed is high. When the contactor 62 is turned on in this state, the high-voltage battery 6 and the inverter 5 are connected at a voltage higher than the upper limit voltage of the high-voltage battery 6 and the high-voltage battery 6 may be broken.

Further, the reason why the contactor 62 is turned on when the voltage of the inverter 5 is equal to or smaller than a predetermined voltage is because an electromotive force is generated by the motor 4 when the vehicle was running at a high vehicle speed immediately before even in the low vehicle speed state and a certain period is required to drop a voltage generated by the electromotive force and stored in the smoothing capacitor 52.

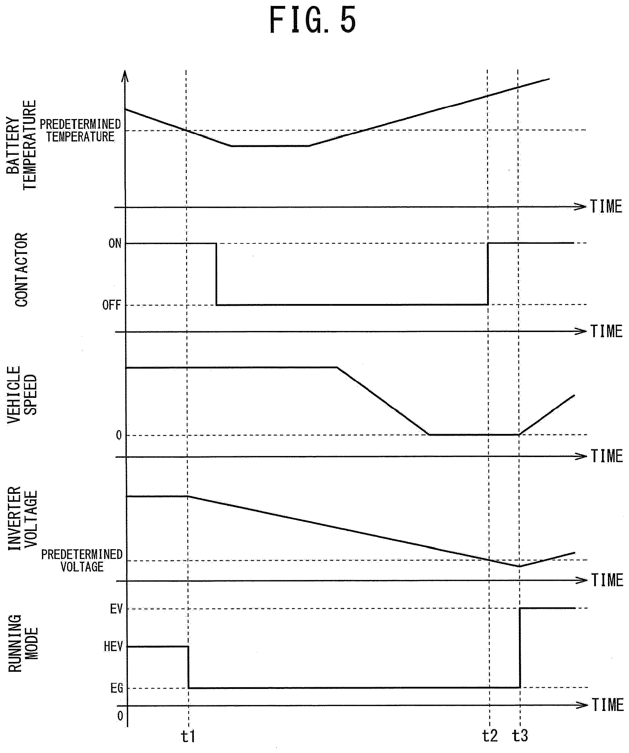

An operation of the contactor control process at the time of running the vehicle will be described with reference to Fig. 5.

When the temperature of the high-voltage battery 6 becomes lower than a predetermined temperature at the time t1, the running mode is switched to the EG mode and the contactor 62 is turned off.

Then, the contactor 62 is turned on at the time t2 when the temperature of the high-voltage battery 6 is equal to or higher than a predetermined temperature, the vehicle speed of the hybrid vehicle 1 is equal to or lower than a predetermined vehicle speed, and the inverter voltage is equal to or smaller than a predetermined voltage and the running mode is switched to the EV mode and the hybrid vehicle 1 starts at the time t3. Additionally, the mode may be switched to the HEV mode when the HEV running condition is satisfied at the time t3.

In this way, in this embodiment, the control unit 8 turns off the contactor 62 when the temperature of the high-voltage battery 6 is lower than a predetermined temperature.

When the temperature of the high-voltage battery 6 is lower than a predetermined temperature, the inverter 5 and the high-voltage battery 6 are electrically disconnected. Accordingly, since the zero torque control is not performed at extremely low temperatures and the consumption of the high-voltage battery 6 is suppressed, it is possible to prevent a situation in which the function of the motor 4 cannot be used.

Further, the control unit 8 selects the EG mode in which the vehicle runs only by using the engine 2 as a drive source when the temperature of the high-voltage battery 6 is lower than a predetermined temperature.

Since the motor 4 cannot be energized when the temperature of the high-voltage battery 6 is lower than a predetermined temperature, the EG mode is selected as the running mode for running. Accordingly, it is possible to prevent a situation in which the function of the motor 4 cannot be used even under an extremely low temperature condition.

Further, when the temperature of the high-voltage battery 6 becomes lower than a predetermined temperature at the time of running the vehicle using the motor 4 as a drive source, the control unit 8 switches the running mode to the EG mode and then turns off the contactor 62.

When the temperature of the high-voltage battery 6 becomes lower than a predetermined temperature so that the contactor 62 is turned off at the time of running the vehicle using the motor 4 as a drive source, the running cannot be maintained. Therefore, it is possible to maintain the running by turning off the contactor 62 after changing the running mode to the EG mode and to prevent a situation in which the function of the motor 4 cannot be used even under an extremely low temperature condition.

Further, when the temperature of the high-voltage battery 6 becomes equal to or higher than a predetermined temperature while the hybrid vehicle 1 is running, the control unit 8 turns on the contactor 62 on the condition that the vehicle speed of the hybrid vehicle 1 is equal to or lower than a predetermined vehicle speed.

When the temperature of the high-voltage battery 6 becomes equal to or higher than a predetermined temperature, the motor 4 can be used. However, when the vehicle speed is high, an electromotive force is generated by the motor 4. When the contactor 62 is turned on in this state, a case is conceived in which the inverter 5 may be connected at the voltage higher than the upper limit voltage of the high-voltage battery 6 and the high-voltage battery 6 may be broken. Therefore, it is possible to prevent a situation in which the function of the motor 4 cannot be used by turning on the contactor 62 on the condition that the vehicle speed is equal to or lower than a predetermined vehicle speed.

Further, when the temperature of the high-voltage battery 6 becomes equal to or higher than a predetermined temperature while the hybrid vehicle 1 is running, the control unit 8 turns on the contactor 62 on the condition that the voltage of the inverter 5 is equal to or smaller than a predetermined voltage.

When the vehicle was running at a high vehicle speed immediately before even in the low vehicle speed state, a case is conceived in which an electromotive force may be generated by the motor 4 and electric power may be stored in the inverter 5. Therefore, it is possible to prevent a situation in which the function of the motor 4 cannot be used by turning on the contactor 62 on the condition that the voltage of the inverter 5 is equal to or smaller than a predetermined voltage.

In this embodiment, an example in which the control unit 8 performs various determinations and calculations based on various sensor information has been described, but this invention is not limited thereto. For example, the hybrid vehicle 1 may include a communication unit capable of communicating with an external device such as an external server, perform various determinations or calculations by the external device based on detection information of various sensors transmitted from the communication unit, receive the determination result or calculation result by the communication unit, and perform various controls using the received determination result or calculation result.

While embodiments of this invention have been described, it is apparent that some artisan could have made changes without departing from the scope of this invention as defined in the appended claims.

### (DESCRIPTION OF REFERENCE NUMERALS)

1 ... Hybrid vehicle, 2 ... Engine, 4 ... Motor, 5 ... Inverter, 6 ... High-voltage battery (battery), 8 ... Control unit, 41 ... Temperature sensor, 51 ... Inverter circuit, 52 ... Smoothing capacitor, 61 ... Battery status sensor, 62 ... Contactor, 82 ... Vehicle speed sensor, 83 ... Ignition switch

## Claims

1. A control device of a hybrid vehicle including an engine (2), a motor (4) mechanically and directly connected to the engine (2), a battery (6) supplying electric power to the motor (4), an inverter (5) charging and discharging electric power between the motor (4) and the battery (6), and a contactor (62) taking any one of an on state of electrically connecting the battery (6) and the inverter (5) and an off state of electrically disconnecting the battery (6) and the inverter (5), the control device being **characterized by**
a control unit (8) performing zero torque control of controlling a motor torque so that a load given from the motor (4) to the engine (2) becomes zero at the time of running the vehicle only using the engine (2) as a drive source,
wherein the control unit (8) causes the contactor (62) to take the off state when a temperature of the battery (6) is lower than a predetermined temperature.

2. The control device of the hybrid vehicle as claimed in claim 1,
wherein when the temperature of the battery (6) is lower than the predetermined temperature, the control unit (8) selects a running mode causing the vehicle to run only using the engine (2) as a drive source.

3. The control device of the hybrid vehicle as claimed in claim 1 or 2,
wherein when the temperature of the battery (6) becomes lower than the predetermined temperature at the time of running the vehicle using the motor (4) as a drive source, the control unit (8) changes a mode to a running mode causing the vehicle to run only using the engine (2) as a drive source and then causes the contactor (62) to take the off state.

4. The control device of the hybrid vehicle as claimed in claim 3,
wherein when the temperature of the battery (6) becomes equal to or higher than the predetermined temperature while the hybrid vehicle is running, the control unit (8) causes the contactor (62) to take the on state on the condition that a vehicle speed of the hybrid vehicle is equal to or lower than a predetermined vehicle speed.

5. The control device of the hybrid vehicle as claimed in claim 3 or 4,
wherein when the temperature of the battery (6) becomes equal to or higher than the predetermined temperature while the hybrid vehicle is running, the control unit (8) causes the contactor (62) to take the on state on the condition that a voltage of the inverter (5) is equal to or smaller than a predetermined voltage.

## Patentansprüche

1. Eine Steuervorrichtung für ein Hybridfahrzeug mit einem Verbrennungsmotor (2), einem Motor (4), der mechanisch und direkt mit dem Verbrennungsmotor (2) verbunden ist, einer Batterie (6), die den Motor (4) mit elektrischer Energie versorgt, einem Wechselrichter (5), der elektrische Energie zwischen dem Motor (4) und der Batterie (6) lädt und entlädt, und einem Schütz (62), das entweder einen Ein-Zustand zum elektrischen Verbinden der Batterie (6) und des Wechselrichters (5) oder einen Aus-Zustand zum elektrischen Trennen der Batterie (6) und des Wechselrichters (5) einnimmt, wobei die Steuervorrichtung **gekennzeichnet ist durch**
eine Steuereinheit (8), die eine Null-Drehmoment-Steuerung zum Steuern eines Motordrehmoments durchführt, so dass eine von dem Motor (4) an den Verbrennungsmotor (2) abgegebene Last zu dem Zeitpunkt, zu dem das Fahrzeug nur unter Verwendung des Verbrennungsmotors (2) als Antriebsquelle betrieben wird, Null wird,
wobei die Steuereinheit (8) das Schütz (62) veranlasst, den Aus-Zustand einzunehmen, wenn eine Temperatur der Batterie (6) niedriger als eine vorbestimmte Temperatur ist.

2. Die Steuervorrichtung für das Hybridfahrzeug nach Anspruch 1,
wobei, wenn die Temperatur der Batterie (6) niedriger als die vorbestimmte Temperatur ist, die Steuereinheit (8) einen Fahrmodus auswählt, der bewirkt, dass das Fahrzeug nur unter Verwendung des Verbrennungsmotors (2) als Antriebsquelle fährt.

3. Die Steuervorrichtung für das Hybridfahrzeug nach Anspruch 1 oder 2,
wobei, wenn die Temperatur der Batterie (6) zum Zeitpunkt des Fahrens des Fahrzeugs unter Verwendung des Motors (4) als Antriebsquelle niedriger als eine vorbestimmte Temperatur wird, die Steuereinheit (8) einen Modus in einen Fahrmodus ändert, der bewirkt, dass das Fahrzeug nur unter Verwendung des Verbrennungsmotors (2) als Antriebsquelle fährt, und dann das Schütz (62) veranlasst, den Aus-Zustand einzunehmen.

4. Die Steuervorrichtung für das Hybridfahrzeug nach Anspruch 3,
wobei, wenn die Temperatur der Batterie (6) gleich oder höher als die vorbestimmte Temperatur wird, während das Hybridfahrzeug fährt, die Steuereinheit (8) das Schütz (62) veranlasst, den Ein-Zustand unter der Bedingung einzunehmen, dass eine Fahrzeuggeschwindigkeit des Hybridfahrzeugs gleich oder niedriger als eine vorbestimmte Fahrzeuggeschwindigkeit ist.

5. Die Steuervorrichtung für das Hybridfahrzeug nach Anspruch 3 oder 4,
wobei, wenn die Temperatur der Batterie (6) gleich oder höher als die vorbestimmte Temperatur wird, während das Hybridfahrzeug fährt, die Steuereinheit (8) das Schütz (62) veranlasst, den Ein-Zustand unter der Bedingung einzunehmen, dass eine Spannung des Wechselrichters (5) gleich oder kleiner als eine vorbestimmte Spannung ist.

## Revendications

1. Dispositif de commande d'un véhicule hybride comportant un moteur thermique (2), un moteur électrique (4) mécaniquement et directement raccordé au moteur thermique (2), une batterie (6) fournissant une puissance électrique au moteur électrique (4), un inverseur (5) chargeant et déchargeant une puissance électrique entre le moteur électrique (4) et la batterie (6), et un contacteur (62) adoptant l'un quelconque d'un état de marche pour la connexion électrique de la batterie (6) et de l'inverseur (5) et d'un état d'arrêt pour la déconnexion électrique de la batterie (6) et de l'inverseur (5), le dispositif de commande étant **caractérisé par**
une unité de commande (8) réalisant une commande de couple nul consistant à commander un couple de moteur de sorte qu'une charge donnée du moteur électrique (4) au moteur thermique (2) devienne nulle au moment du fonctionnement du véhicule avec uniquement le moteur thermique (2) comme source d'entraînement,
dans lequel l'unité de commande (8) amène le contacteur (62) à adopter l'état d'arrêt lorsqu'une température de la batterie (6) est inférieure à une température prédéterminée.

2. Dispositif de commande du véhicule hybride selon la revendication 1,
dans lequel lorsque la température de la batterie (6) est inférieure à la température prédéterminée, l'unité de commande (8) sélectionne un mode de fonctionnement amenant le véhicule à fonctionner avec uniquement le moteur thermique (2) comme source d'entraînement.

3. Dispositif de commande du véhicule hybride selon la revendication 1 ou 2,
dans lequel lorsque la température de la batterie (6) devient inférieure à la température prédéterminée au moment du fonctionnement du véhicule avec le moteur électrique (4) comme source d'entraînement, l'unité de commande (8) passe à un mode de fonctionnement amenant le véhicule à fonctionner avec uniquement le moteur thermique (2) comme source d'entraînement et amène ensuite le contacteur (62) à adopter l'état d'arrêt.

4. Dispositif de commande du véhicule hybride selon la revendication 3,
dans lequel lorsque la température de la batterie (6) devient égale ou supérieure à la température prédéterminée alors que le véhicule hybride fonctionne, l'unité de commande (8) amène le contacteur (62) à adopter l'état de marche à la condition qu'une vitesse de véhicule du véhicule hybride soit égale ou inférieure à une vitesse de véhicule prédéterminée.

5. Dispositif de commande du véhicule hybride selon la revendication 3 ou 4,
dans lequel lorsque la température de la batterie (6) devient égale ou supérieure à la température prédéterminée alors que le véhicule hybride fonctionne, l'unité de commande (8) amène le contacteur (62) à adopter l'état de marche à la condition qu'une tension de l'inverseur (5) soit égale ou inférieure à une tension prédéterminée.
